# EUROPÄISCHE PATENTSCHRIFT

(11) **EP 0 861 207 B1**
(45) Veröffentlichungstag und Bekanntmachung des Hinweises auf die Patenterteilung: **26.04.2000**
(21) Anmeldenummer: 96938090.6
(22) Anmeldetag: 05.11.1996
(51) Int. Cl.: C01B 33/158, C01B 33/143

(54) **VERFAHREN ZUR HERSTELLUNG VON ORGANISCH MODIFIZIERTEN AEROGELEN UNTER VERWENDUNG VON ALKOHOLEN, BEI DEM DIE GEBILDETEN SALZE AUSGEFÄLLT WERDEN**
PROCESS FOR PREPARING ORGANICALLY MODIFIED AEROGELS USING ALCOHOLS, WHEREIN THE RESULTANT SALTS ARE PRECIPITATED
PROCEDE DE PREPARATION D'AEROGELS MODIFIES DE MANIERE ORGANIQUE A L'AIDE D'ALCOOLS, SELON LEQUEL LES SELS FORMES SONT PRECIPITES

(30) Priorität: 13.11.1995 DE 19541992
(43) Veröffentlichungstag der Anmeldung: 02.09.1998
(73) Patentinhaber: CABOT CORPORATION, Boston, MA 02109 (US)
(72) Erfinder: SCHWERTFEGER, Fritz, D-60529 Frankfurt am Main (DE); ZIMMERMANN, Andreas, D-64347 Griesheim (DE)
(74) Vertreter: Luderschmidt, Schüler & Partner GbR
(86) Internationale Anmeldenummer: EP9604820
(87) Internationale Veröffentlichungsnummer: WO9718161

(56) Entgegenhaltungen:
- EP-A- 0 658 513
- WO-A-95/06617
- DE-A- 3 346 180
- US-A- 2 285 477

## Beschreibung

Verfahren zur Herstellung von organisch modifizierten Aerogelen unter Verwendung von Alkoholen, bei dem die gebildeten Salze ausgefällt werden.

Die Erfindung betrifft ein Verfahren zur Herstellung von organisch modifizierten SiO₂-Aerogelen unter Verwendung von Alkoholen, bei dem die gebildeten Salze ausgefällt werden.

Aerogele, insbesondere solche mit Porositäten über 60% und Dichten unter 0,6 g/cm³, weisen eine äußerst geringe thermische Leitfähigkeit auf und finden deshalb Anwendung als Wärmeisolationsmaterial, wie z. B. in der EP-A-0 171 722 beschrieben.

Aerogele im weiteren Sinn, d.h. im Sinne von "Gel mit Luft als Dispersionsmittel", werden durch Trocknung eines geeigneten Gels hergestellt. Unter den Begriff "Aerogel" in diesem Sinne, fallen Aerogele im engeren Sinne, Xerogele und Kryogele. Dabei wird ein getrocknetes Gel als Aerogel im engeren Sinn bezeichnet, wenn die Flüssigkeit des Gels bei Temperaturen oberhalb der kritischen Temperatur und ausgehend von Drücken oberhalb des kritischen Druckes entfernt wird. Wird die Flüssigkeit des Gels dagegen unterkritisch, beispielsweise unter Bildung einer Flüssig-Dampf-Grenzphase entfernt, dann bezeichnet man das entstandene Gel als Xerogel. Es ist anzumerken, daß es sich bei den erfindungsgemäßen Gelen um Aerogele, im Sinne von Gel mit Luft als Dispersionsmittel handelt.

SiO₂-Aerogele können beispielsweise durch saure Hydrolyse von Tetraethylorthosilikat in Ethanol hergestellt werden. Bei der Hydrolyse entsteht ein Gel, dessen Struktur unter anderem durch die Temperatur, den pH-Wert und die Dauer des Gelierprozesses bestimmt ist. Jedoch kollabiert die Gelstruktur im allgemeinen bei der Trocknung der nassen Gele, da die bei der Trocknung auftretenden Kapillarkräfte extrem groß sind. Der Gelkollaps kann dadurch verhindert werden, daß die Trocknung oberhalb der kritischen Temperatur und des kritischen Druckes des Lösungsmittels durchgeführt wird. Da in diesem Bereich die Phasengrenze flüssig/gasförmig verschwindet, entfallen auch die Kapillarkräfte und das Gel verändert sich während der Trocknung nicht, d. h. es tritt auch kein Schrumpfen des Gels während der Trocknung auf. Auf dieser Trocknungstechnik basierende Herstellungsverfahren sind z. B. aus der EP-A-0 396 076 oder der WO 92/03378 bekannt. Diese Technik erfordert aber, beispielsweise bei der Verwendung von Ethanol, eine Temperatur von etwa 240°C und Drücke von über 60 bar. Der Austausch von Ethanol gegen CO₂ vor der Trocknung erniedrigt zwar die Trocknungstemperatur auf ca. 30°C, der benötigte Druck liegt dann aber bei über 70 bar.

Eine Alternative zu obiger Trocknung bietet ein Verfahren zur unterkritischen Trocknung von SiO₂-Gelen, wenn diese vor der Trocknung mit einem chlorhaltigen Silylierungsmittel umgesetzt werden. Das SiO₂-Gel kann dabei beispielsweise durch saure Hydrolyse von Tetraalkoxysilanen, bevorzugt Tetraethoxysilan (TEOS), in einem geeigneten organischen Lösungsmittel, bevorzugt Ethanol, mittels Wasser erhalten werden. Nach Austausch des Lösungsmittels gegen ein geeignetes organisches Lösungsmittel wird in einem weiteren Schritt das erhaltene Gel mit einem chlorhaltigen Silylierungsmittel umgesetzt. Als Silylierungsmittel werden dabei aufgrund ihrer Reaktivität bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend aus einem organischen Lösungsmittel heraus an der Luft getrocknet werden. Damit können Aerogele mit Dichten unter 0,4 g/cm³ und Porositäten über 60% erreicht werden.
Das auf dieser Trocknungstechnik basierende Herstellungsverfahren ist ausführlich in der WO 94/25149 beschrieben.

Die oben beschriebenen Gele können darüber hinaus vor der Trocknung in der alkohol-wässrigen Lösung mit Tetraalkoxysilanen versetzt und gealtert werden, um die Gelnetzwerkstärke zu erhöhen, wie z.B. in der WO 92/20623 offenbart.

Die bei den oben beschriebenen Verfahren als Ausgangsmaterialien verwendeten Tetraalkoxysilane stellen jedoch einen außerordentlich hohen Kostenfaktor dar. Darüber hinaus fallen bei der Silylierung mittels chlorhaltiger Silylierungsmittel zwangsläufig in sehr großen Mengen Hydrogenchlorid (HCI) sowie eine Vielzahl damit verbundener Nebenprodukte an, die gegebenenfalls eine sehr aufwendige und kostenintensive Reinigung der silylierten SiO₂-Gele durch mehrmaliges Waschen mit einem geeigneten organischen Lösungsmittel erfordern. Die damit verbundenen, besonders korrosionsbeständigen Produktionsanlagen sind ebenfalls sehr teuer. Das mit der Entstehung sehr großer Mengen an HCI-Gas verbundene Sicherheitsrisiko bedarf noch zusätzlich einer sehr aufwendigen Technik und ist damit ebenfalls sehr kostenintensiv.

Eine erste nicht unerhebliche Kostensenkung kann durch die Verwendung von Wasserglas als Ausgangsmaterial für die Herstellung der SiO₂-Gele erreicht werden. Dazu kann beispielsweise aus einer wässrigen Wasserglaslösung mit Hilfe eines lonenaustauscherharzes eine Kieselsäure hergestellt werden, die durch Zugabe einer Base zu einem SiO₂-Gel polykondensiert. Nach Austausch des wässrigen Mediums gegen ein geeignetes organisches Lösungsmittel wird dann in einem weiteren Schritt das erhaltene Gel mit einem chlorhaltigen Silylierungsmittel umgesetzt. Als Silylierungsmittel werden dabei aufgrund ihrer Reaktivität ebenfalls bevorzugt Methylchlorsilane (Me₄₋ₙSiClₙ mit n = 1 bis 3) eingesetzt. Das dabei entstehende, auf der Oberfläche mit Methylsilylgruppen modifizierte SiO₂-Gel kann anschließend ebenfalls aus einem organischen Lösungsmittel heraus an der Luft getrocknet werden. Das auf dieser Technik basierende Herstellungsverfahren wird z.B. in der DE-A-43 42 548 offenbart.

Die weiter oben beschriebenen, mit der Verwendung von chlorhaltigen Silylierungsmitteln verbundenen Probleme der außerordentlich hohen Verfahrenskosten sind jedoch durch die Verwendung von Wasserglas als Ausgangsmaterial nicht gelöst.

In der deutschen Patentanmeldung P 19502453.2 wird die Verwendung eines chlorfreien Silylierungsmittels beschrieben. Dazu wird das in den oben beschriebenen Verfahren, auf unterschiedlichen Wegen erhaltene silikatische Lyogel vorgelegt und mit einem chlorfreien Silylierungsmittel umgesetzt. Als Silylierungsmittel werden dabei vorzugsweise Methylisopropenoxysilane (Me₄₋ₙSi(OC(CH₃)CH₂)ₙ mit n = 1 bis 3) eingesetzt. Das dabei entstehende, auf der Oberfläche mit Methylsilylgruppen modifizierte SiO₂-Gel kann anschließend wiederum aus einem organischen Lösungsmittel heraus an der Luft getrocknet werden.

Durch die Verwendung der chlorfreien Silylierungsmittel wird zwar das Problem der Bildung von HCI gelöst, jedoch stellen die verwendeten, chlorfreien Silylierungsmittel ebenfalls einen außerordentlich hohen Kostenfaktor dar.

In der WO 95/06617 werden hydrophobe Kieselsäureaerogele offenbart, die durch Umsetzung einer Wasserglaslösung mit einer Säure bei einem pH-Wert von 7,5 bis 11, weitgehende Befreiung des gebildeten Kieselsäurehydrogels von ionischen Bestandteilen durch Waschen mit Wasser oder verdünnten wässrigen Lösungen anorganischer Basen, wobei der pH-Wert des Hydrogels im Bereich von 7,5 bis 11 gehalten wird, Verdrängung der in dem Hydrogel enthaltenen wässrigen Phase durch einen Alkohol und anschließende überkritische Trocknung des erhaltenen Alkogels, erhältlich sind.

Als Alkohole eignen sich dabei für den Wasseraustausch C₁-C₅-Alkohole, vorzugsweise C₃-C₅-Alkohole, insbesondere Isopropanol.

Es ist bekannt, daß es bei Verwendung der oben genannten Alkohole unter überkritischen Bedingungen (WO 95/06617) zu einer Veresterung des verwendeten Alkohols mit den Oberflächen-OH-Gruppen des Lyogels kommt. Dadurch können Alkoxy-modifizierte Aerogele, wie z.B. Isopropoxy-modifizierte Aerogele erhalten werden, die hydrophobe Oberflächengruppen aufweisen.

Nachteilig bei dem in der WO 95/06617 offenbarten Herstellungsverfahren ist jedoch, daß überkritische Bedingungen für die Trocknung benötigt werden, die z.B. für Isopropanol bei einer Temperatur im Bereich von 240 bis 280°C und bei einem Druck von etwa 55 bis 90 bar liegen.

Ein weiteres ungelöstes Problem stellen die bei der Herstellung von Aerogelen aus Wasserglas anfallenden wäßrigen Salzlösungen dar. Um eine Wasserglaslösung in ein zur Kondensation befähigtes Kieselsäuresol zu überführen, müssen die Kationen (meist Natrium- und/oder Kaliumionen) in der Wasserglaslösung gegen Protonen ausgetauscht werden. Dazu können organische und/oder anorganische Säuren verwendet werden. Die dabei zwangsläufig ebenfalls in gelöster Form entstehenden Salze der oben genannten Kationen (z.B. NaCl oder Na₂SO₄) müssen vor, während oder nach der Gelalterung aus dem Gel gewaschen werden. Diese stark verdünnten, wäßrigen Salzlösungen stellen heutzutage ein großes Entsorgungsproblem dar, da sie in größeren Mengen nicht mehr ohne weiteres in Flüsse und Seen eingeleitet werden dürfen. Eine den gängigen Vorschriften entsprechende Endlagerung dieser Lösungen stellt einen extrem hohen Kostenfaktor dar.

Aufgabe der vorliegenden Erfindung war es deshalb, ein Verfahren zur Herstellung von Aerogelen mit hydrophoben Oberflächengruppen bereitzustellen, das keines der oben beschriebenen und damit aus dem Stand der Technik bekannten Probleme aufweist. Insbesondere soll das erfindungsgemäße Verfahren kostengünstig sowie verfahrenstechnisch einfach durchzuführen sein.

Eine weitere Aufgabe der vorliegenden Erfindung war es, ein Verfahren zur Herstellung von organisch modifizierten SiO₂-Aerogelen bereitzustellen, bei dem keine verdünnten wäßrigen Salzlösungen anfallen.

Diese Aufgaben werden gelöst durch ein Verfahren zur Herstellung von organisch modifizierten Aerogelen, bei dem man
a) aus einer wäßrigen Wasserglaslösung mit Hilfe mindestens einer organischen und/oder anorganischen Säure ein Kieselsäuresol herstellt, das einen pH-Wert ≤ 4,0 hat,
b) das dabei entstandene Kieselsäuresol durch Zugabe einer Base zu einem SiO₂-Gel polykondensiert,
c) das in Schritt b) erhaltene Gel mit einem organischen Lösungsmittel solange wäscht, bis der Wassergehalt des Gels ≤ 5 Gew.% ist,
d) das in Schritt c) erhaltene Gel mit mindestens einem C₁-C₆-Alkohol oberflächenmodifiziert, und
e) das in Schritt d) erhaltene oberflächenmodifizierte Gel trocknet, das dadurch gekennzeichnet ist, daß die mindestens eine Säure mit den Kationen des Wasserglases im Kieselsäuresol schwerlösliche Salze bildet, und man vor Schritt b) die gebildeten, schwerlöslichen Salze weitestgehend ausfällt und vom Kieselsäuresol abtrennt.
Als Wasserglaslösung wird in Schritt a) im allgemeinen eine 6 bis 25 Gew.%ige (bezogen auf den SiO₂-Gehalt) Natrium- und/oder Kaliumwasserglaslösung verwendet. Bevorzugt ist eine 17 bis 20 Gew.%ige Wasserglaslösung. Ferner kann die Wasserglaslösung auch bezogen auf SiO₂ bis 90 Gew.-% zur Kondensation befähigte Zirkonium-, Aluminium- und/oder Titan-Verbindungen enthalten.

Als Säuren werden allgemein 15 bis 50 Gew.%ige Säuren verwendet, die mit Natrium- und/oder Kaliumionen schwerlösliche Salze bilden. Es können auch Mischungen entsprechender Säuren eingesetzt werden. Bevorzugt sind Schwefel-, Phosphor-, Fluß- und Oxalsäure. Besonders bevorzugt ist Schwefelsäure.

Um eine möglichst vollständige Ausfällung und eine gute Abtrennung der im Schritt a) gebildeten schwerlöslichen Salze zu erreichen, sollte das Kieselsäuresol eine Temperatur zwischen 0 und 30°C, vorzugsweise zwischen 0 und 15°C und besonders bevorzugt zwischen 0 und 5°C aufweisen. Dies kann dadurch erreicht werden, daß man die Wasserglaslösung, die Säure und/oder das Kieselsäuresol auf eine Temperatur zwischen 0 und 30°C, vorzugsweise zwischen 0 und 15°C und besonders bevorzugt zwischen 0 und 5°C bringt. Sollte sich dabei eine übersättigte Salzlösung bilden, so kann durch geeignetes Animpfen mit entsprechenden Impfkristallen das Salz zur Ausfällung gebracht werden. Die Abtrennung der gefällten Salze erfolgt mit dem Fachmann bekannten Vorrichtungen, wie z.B. Filter, Fritten, Nutschen, Membranen oder Kristallisationsgefäßen. Bevorzugt sind halbkontinuierliche oder kontinuierliche Verfahren.

Nach der Abtrennung der Salze wird das Kieselsäuresol mit Wasser auf eine Konzentration zwischen 5 und 12 Gew.% (bezogen auf den SiO₂-Gehalt) eingestellt. Besonders bevorzugt ist eine 6 bis 9 Gew.%ige Kieselsäurelösung.

Die Polykondensation des nach Schritt a) erhaltenen, im wesentlichen salzfreien Kieselsäuresols zu einem SiO₂-Gel erfolgt in Schritt b) durch Zugabe einer Base in einem pH-Wert-Bereich zwischen 3,0 und 7,0, vorzugsweise 4,0 und 6,0. Als Base wird im allgemeinen NH₄OH, NaOH, KOH, Al(OH)₃, kolloidale Kieselsäure und/oder eine alkalische Wasserglaslösung eingesetzt. Bevorzugt sind NH₄OH, NaOH und KOH, besonders bevorzugt ist NaOH. Es können aber auch Mischungen der selben verwendet werden.

Der Schritt b) wird im allgemeinen bei einer Temperatur zwischen dem Gefrierpunkt der Lösung und 100°C durchgeführt. Dabei kann gegebenenfalls gleichzeitig ein Formgebungsschritt, wie z.B. Spray-forming, Extrusion oder Tropfenbildung durchgeführt werden.

Vor Schritt c) läßt man das Gel vorzugsweise altern, und zwar im allgemeinen bei 40 bis 100°C, vorzugsweise bei 80 bis 100°C, und einem pH-Wert von 4 bis 11, vorzugsweise 5 bis 7. Die Zeit dafür beträgt im allgemeinen 1 Sekunde bis 12 Stunden, vorzugsweise 1 Sekunde bis 5 Stunden.

Das gealterte Hydrogel kann gegebenenfalls noch mit Wasser elektrolytfrei gewaschen werden.

In Schritt c) wäscht man das aus Schritt b) erhaltene Gel mit einem organischen Lösungsmittel solange, bis der Wassergehalt des Gels ≤ 5 Gew.%, vorzugsweise ≤ 2 Gew.-% und besonders bevorzugt ≤ 1 Gew.-%, ist. Als Lösungsmittel werden im allgemeinen aliphatische Alkohole, Ether, Ester oder Ketone, sowie aliphatische oder aromatische Kohlenwasserstoffe verwendet.

Bevorzugte Lösungsmittel sind C₁-C₅-Alkohole, Aceton, Tetrahydrofuran, Essigsäureethylester, Dioxan, n-Hexan und Toluol. Besonders bevorzugt als Lösungsmittel sind Isopropanol, Isobutanol, tert.-Butanol und Aceton. Man kann aber auch Gemische aus den genannten Lösungsmitteln verwenden. Ferner kann auch zuerst das Wasser mit einem wassermischbaren Alkohol ausgewaschen und dann dieser mit einem Kohlenwasserstoff ausgewaschen werden.

Darüber hinaus kann das in Schritt c) erhaltene Gel zusätzlich noch einem Lösungsmitteltausch unterworfen werden. Beim Lösungsmitteltausch können dabei prinzipiell die gleichen Lösungsmittel verwendet werden, wie beim Waschen in Schritt c). Die beim Waschen bevorzugten Lösungsmittel sind auch beim Lösungsmitteltausch bevorzugt.

Unter Lösungsmitteltausch ist dabei nicht nur der einmalige Tausch des Lösungsmittels zu verstehen, sondern gegebenenfalls auch das mehrmalige Wiederholen mit unterschiedlichen Lösungsmitteln.

Man kann auch das in Schritt c) erhaltene Lyogel einer weiteren Alterung unterziehen. Dies geschieht im allgemeinen zwischen 20°C und dem Siedepunkt des organischen Lösungsmittels. Gegebenenfalls kann auch unter Druck bei höheren Temperaturen gealtert werden. Die Zeit beträgt im allgemeinen 1 Sekunde bis 48 Stunden, vorzugsweise 1 Sekunde bis 24 Stunden. Nach einer solchen Alterung kann sich gegebenenfalls ein weiterer Lösungsmitteltausch zu einem gleichen oder anderen Lösungsmittel anschließen. Dieser zusätzliche Alterungsschritt kann gegebenenfalls auch nochmals wiederholt werden.

In Schritt d) wird das aus Schritt c) erhaltene Gel mit mindestens einem C₁-C₆-Alkohol oberflächenmodifiziert, in dem es in einem Druckbehälter oder Autoklaven unter Druck und erhöhter Temperatur gehalten wird.

Vorzugsweise werden C₃- C₅-Alkohole verwendet, wie z.B. Isopropanol, Isobutanol, tert.-Butanol, sek.-Pentanol und tert.-Pentanol. Besonders bevorzugt sind Isopropanol, Isobutanol und tert.-Butanol.

Der Alkohol wird dabei im allgemeinen in einer Menge von 1 bis 100 Gew.-%, bezogen auf das gesamte Lösungsmittel eingesetzt.

Die Alkohole können allein, in Gemischen oder mit anderen nichtreaktiven organischen Lösungsmitteln oder Lösungsmittelgemischen, wie z.B. Aceton, Tetrahydrofuran, Dioxan, n-Hexan oder Toluol, verwendet werden.

Die Temperaturen und Drücke zur Oberflächenmodifizierung hängen vom jeweils verwendeten Lösungsmittel bzw. Lösungsmittelgemisch ab. Sie liegen jedoch deutlich unterhalb der kritischen Temperatur und des kritischen Druckes der verwendeten Alkohole.

Bevorzugt ist eine Temperatur zwischen 25°C und 220°C, besonders bevorzugt zwischen 150 und 220°C.
Der Druck liegt bevorzugt zwischen 1 und 50 bar, besonders bevorzugt zwischen 20 und 50 bar.
Die Zeiten, bei dem das Lyogel unter diesen Bedingungen gehalten wird, liegen vorzugsweise zwischen 30 Minuten und 20 Stunden, besonders bevorzugt sind Zeiten zwischen 30 Minuten und 10 Stunden.

Gegebenenfalls können zusätzlich auch noch geringe Mengen eines Silylierungsmittels zugesetzt werden. Als Silylierungsmittel eignen sich im allgemeinen Silane der Formeln R¹₄₋ₙSiClₙ oder R¹₄₋ₙ Si(OR²)ₙ mit n = 1 bis 3, wobei R¹ und R² unabhängig voneinander C₁-C₆-Alkyl, Cyclohexyl oder Phenyl sind. Auch Isopropenoxysilane sowie Silazane sind geeignet. Vorzugsweise verwendet man Trimethylchlorsilan. Darüber hinaus können alle dem Fachmann bekannten Silylierungsmittel eingesetzt werden, beispielsweise auch solche, wie in der DE-A-44 30 669 offenbart.
Die Mengen liegen im allgemeinen zwischen 0 und 1 Gew.-% (bezogen auf das Lyogel), bevorzugt sind Konzentrationen zwischen 0 und 0,5 Gew.-%, besonders bevorzugt zwischen 0 und 0,2 Gew.-%.

Zur Beschleunigung des oberflächenmodifizierenden Prozesses kann sich ferner Wasser im System befinden. Bevorzugt sind dabei Konzentrationen zwischen 0 und 10 Gew.-% (bezogen auf das Lyogel). Darüber hinaus können sich auch dem Fachmann bekannte Katalysatoren, wie z.B. Säuren, Basen oder metallorganische Verbindungen zur Beschleunigung des Prozesses im System befinden.

Gegebenenfalls wird das im Schritt d) erhaltene oberflächenmodifizierte Gel vor dem Schritt e) noch einem Lösungsmitteltausch unterzogen. Als Lösungsmittel werden dazu im allgemeinen aliphatische Alkohole, Ether, Ester oder Ketone sowie aliphatische oder aromatische Kohlenwasserstoffe verwendet. Man kann auch Gemische der oben genannten Lösungsmittel verwenden. Bevorzugte Lösungsmittel sind Methanol, Ethanol, i-Propanol, Aceton, Tetrahydrofuran, Essigsäureethylester, Dioxan, n-Hexan, n-Heptan und Toluol. Besonders bevorzugt wird i-Propanol als Lösungsmittel verwendet.

In Schritt e) wird das oberflächenmodifizierte, und vorzugsweise danach gewaschene Gel vorzugsweise unterkritisch, besonders bevorzugt bei Temperaturen von -30 bis 200°C, und insbesondere von 0 bis 100°C, getrocknet. Die bei der Trocknung angewandten Drücke liegen vorzugsweise bei 0,001 bis 20 bar, besonders bevorzugt bei 0,01 bis 5 bar.

Das in Schritt d) erhaltene Gel kann auch überkritisch getrocknet werden. Dies erfordert entsprechend dem jeweiligen Lösungsmittel höhere Temperaturen als 200°C und/oder höhere Drücke als 20 bar. Dies ist ohne weiteres möglich, aber es ist mit erhöhtem Aufwand verbunden und bringt keine wesentlichen Vorteile mit sich.

Die Trocknung wird im allgemeinen so lange fortgeführt, bis das Gel einen Lösungsmittel-Restgehalt von weniger als 0,1 Gew.-% aufweist.

In einer weiteren Ausführungsform kann das Gel nach der formgebenden Polykondensation in Schritt b) und/oder jedem nachfolgenden Verfahrensschritt nach den dem Fachmann bekannten Techniken, wie z.B. Mahlen, zerkleinert werden.

Des weiteren können dem Sol vor der Gelherstellung zur Reduktion des Strahlungsbeitrags zur Wärmeleitfähigkeit IR-Trübungsmittel, wie z.B. Ruß, Titandioxid, Eisenoxide und/oder Zirkondioxid zugesetzt werden.

Ebenfalls vor der Gelherstellung können dem Sol zur Erhöhung der mechanischen Stabilität Fasern zugesetzt werden. Als Fasermaterialien können anorganische Fasern, wie Glasfasern oder Mineralfasern, organische Fasern, wie Polyesterfasern, Aramidfasern, Nylonfasern oder Fasern pflanzlichen Ursprungs, sowie Gemische derselben verwendet werden. Die Fasern können auch beschichtet sein, z.B. Polyesterfasern, die mit einem Metall wie Aluminium metallisiert sind.

In einer weiteren Ausführungsform kann das Gel je nach Anwendung vor der Oberflächenmodifizierung noch einer Netzwerkverstärkung unterworfen werden. Dies geschieht, indem man das erhaltene Gel mit einer Lösung eines zur Kondensation befähigten Alkyl- und/oder Arylorthosilikates der Formel R¹₄₋ₙSi(OR²)ₙ, wobei n =2 bis 4 ist und R¹ und R² unabhängig voneinander lineare oder verzweigte C₁-C₆-Alkyl-Reste, Cyclohexyl-Reste oder Phenyl-Reste sind, oder mit einer wässrigen Kieselsäure-Lösung umsetzt. Diese Netzwerkverstärkung kann vor und/oder nach jedem durchgeführten Alterungsschritt bzw. Lösungsmitteltausch durchgeführt werden.

In einer weiteren bevorzugten Ausführungsform weist das Gel vor der Trocknung einen E-Modul auf der größer als 3 MPa beträgt, eine Oberfläche nach BET auf, die größer als 400 m²/g ist und eine Porenradienverteilung auf, die im Bereich von 2 bis 20 nm, vorzugsweise im Bereich von 5 bis 10 nm, liegt, damit die nach der unterkritischen Trocknung erhaltenen Aerogele vorzugsweise eine Dichte von ≤ 200 kg/m³, besonders bevorzugt von ≤ 150 kg/m³ aufweisen.

Das erfindungsgemäße Verfahren wird im folgenden anhand von einem Ausführungsbeispiel näher beschrieben, ohne dadurch beschränkt zu werden.

### Beispiel 1

236 g einer auf 0°C gekühlten 25%igen H₂SO₄ werden unter ständigem Kühlen auf 0°C tropfenweise mit 707 g einer auf 7°C gekühlten Natriumwasserglaslösung (mit einem Gehalt von 17 Gew.-% SiO₂ und einem Na₂O:SiO₂ Verhältnis von 1:3,3) versetzt. Dabei stellt sich ein pH-Wert von 1,6 ein. Das ausfallende Na₂SO₄ * 10 H₂O wird bei 0°C mit Hilfe einer Nutsche vom Kieselsäuresol abgetrennt und das Kieselsäuresol mit 280 ml H₂O verdünnt.
Das so erhaltene Kieselsäuresol wird bei einer Temperatur von 5°C unter Rühren mit 26 ml einer in NaOH-Lösung versetzt, um einen pH-Wert von 4,7 einzustellen. Danach wird das entstandene Hydrogel 2,5 Stunden bei 85°C gealtert.
Das Elastizitätsmodul des gealterten Hydrogels beträgt 15,5 MPa. Es wird mit 2 l warmem Wasser gewaschen und anschließend mit Isopropanol extrahiert, bis der Wassergehalt im Gel unter 2,0 Gew.-% liegt. Anschließend wird das isopropanolhaltige Lyogel in Isopropanol in einem Autoklaven auf 220°C und einen Druck von 40 bar erhitzt und 3 Stunden unter diesen Bedingungen gehalten. Die Trocknung des Gels erfolgt an Luft (3 Stunden bei 40°C, dann 2 Stunden bei 50°C und 12 Stunden bei 150°C).
Das so erhaltene, transparente Aerogel hat eine Dichte von 0,15 g/cm³. Die spezifische Oberfläche nach BET liegt bei 500 m²/g. Der λ-Wert liegt bei 0,018 W/mK.

Die Wärmeleitfähigkeit wurde mit einer Heizdrahtmethode (s. z.B. O. Nielsson, G. Rüschenpöhler, J. Groß, J. Fricke, High Temperatures - High Pressures, Vol. 21, 267-274 (1989)) gemessen.

## Patentansprüche

1. Verfahren zur Herstellung von organisch modifizierten Aerogelen, bei dem man
a) aus einer wäßrigen Wasserglaslösung mit Hilfe mindestens einer organischen und/oder anorganischen Säure ein Kieselsäuresol herstellt, das einen pH-Wert ≤ 4,0 hat, wobei die mindestens eine Säure mit den Kationen des Wasserglases im Kieselsäuresol schwerlösliche Salze bildet,
b) die gebildeten schwerlöslichen Salze bei Temperaturen von 0 bis 30°C weitestgehend ausfällt und vom Kieselsäuresol abtrennt,
c) das dabei entstandene Kieselsäuresol durch Zugabe einer Base zu einem SiO₂-Gel polykondensiert,
d) das in Schritt c) erhaltene Gel mit einem organischen Lösungsmittel solange wäscht, bis der Wassergehalt des Gels ≤ 5 Gew.% ist,
e) das in Schritt d) erhaltene Gel mit mindestens einem C₁-C₆-Alkohol oberflächenmodifiziert, und
f) das in Schritt e) erhaltene oberflächenmodifizierte Gel trocknet.

2. Verfahren gemäß Anspruch 1, dadurch gekennzeichnet, daß man als Wasserglaslösung in Schritt a) eine 6 bis 25 Gew.-%ige Natrium- und/oder Kaliumwasserglaslösung verwendet.

3. Verfahren gemäß Anspruch 1 oder 2, dadurch gekennzeichnet, daß die Wasserglaslösung, bezogen auf SiO₂ bis 90 Gew.-% zur Kondensation befähigte Zirkonium-, Aluminium- und/oder Titan-Verbindungen enthält.

4. Verfahren gemäß mindestens einem der Ansprüche 1 bis 3, dadurch gekennzeichnet, daß man als Säure 15 bis 50 Gew-%ige Schwefelsäure verwendet.

5. Verfahren gemäß mindestens einem der Ansprüche 1 bis 4, dadurch gekennzeichnet, daß das gebildete Kieselsäuresol eine Temperatur im Bereich von 0 bis 30°C aufweist.

6. Verfahren gemäß mindestens einem der Ansprüche 1 bis 5, dadurch gekennzeichnet, daß man als Base in Schritt b) NaOH, NH₄OH, KOH, Al(OH)₃, kolloidale Kieselsäure und/oder eine alkalische Wasserglaslösung verwendet.

7. Verfahren gemäß mindestens einem der Ansprüche 1 bis 6, dadurch gekennzeichnet, daß man das Gel vor Schritt c) bei 40 bis 100°C, einem pH-Wert von 4 bis 11 zwischen 1 Sekunde und 12 Stunden altert.

8. Verfahren gemäß mindestens einem der Ansprüche 1 bis 7, dadurch gekennzeichnet, daß man in Schritt c) als organisches Lösungsmittel einen C₁-C₅-Alkohol, Aceton, Tetrahydrofuran, Essigsäureethylester, Dioxan, n-Hexan, n-Heptan und/oder Toluol einsetzt.

9. Verfahren gemäß mindestens einem der Ansprüche 1 bis 8, dadurch gekennzeichnet, daß man das in Schritt b) erhaltene Gel vor der Oberflächenmodifizierung mit einer Lösung eines zur Kondensation befähigten Alkyl- und/oder Arylorthosilikates der Formel R¹₄₋ₙSi(OR²)ₙ, wobei n = 2 bis 4 ist und R¹ und R² unabhängig voneinander lineare oder verzweigte C₁-C₆-Alkyl-Reste, Cyclohexyl-Reste oder Phenyl-Reste sind, oder mit einer wässrigen Kieselsäure-Lösung umsetzt.

10. Verfahren gemäß mindestens einem der Ansprüche 1 bis 9, dadurch gekennzeichnet, daß man in Schritt d) mindestens einen C₃-C₅-Alkohol einsetzt.

11. Verfahren gemäß mindestens einem der Ansprüche 1 bis 10, dadurch gekennzeichnet, daß man in Schritt d) Isopropanol, Isobutanol oder tert.-Butanol einsetzt.

12. Verfahren gemäß mindestens einem der Ansprüche 1 bis 11, dadurch gekennzeichnet, daß man den Alkohol in einer Menge von 1 bis 100 Gew.-%, bezogen auf das gesamte Lösungsmittel einsetzt.

13. Verfahren gemäß mindestens einem der Ansprüche 1 bis 12, dadurch gekennzeichnet, daß man die Oberflächenmodifikation bei einer Temperatur im Bereich von 25°C bis 220°C, einem Druck von 1 bis 50 bar zwischen 30 Minuten und 20 Stunden durchführt.

14. Verfahren gemäß mindestens einem der Ansprüche 1 bis 13, dadurch gekennzeichnet, daß man die Oberflächenmodifikation in Gegenwart geringer Mengen eines Silylierungsmittels durchführt.

15. Verfahren gemäß mindestens einem der Ansprüche 1 bis 14, dadurch gekennzeichnet, daß man die Oberflächenmodifikation in Gegenwart eines Katalysators durchführt.

16. Verfahren gemäß mindestens einem der Ansprüche 1 bis 15, dadurch gekennzeichnet, daß man das oberflächenmodifizierte Gel vor dem Schritt e) noch einem Lösungsmitteltausch unterwirft.

17. Verfahren gemäß mindestens einem der Ansprüche 1 bis 16, dadurch gekennzeichnet, daß man das Gel in Schritt e) unterkritisch trocknet.

18. Verfahren gemäß mindestens einem der Ansprüche 1 bis 17, dadurch gekennzeichnet, daß man dem Sol vor der Gelherstellung IR-Trübungsmittel und/oder Fasern zusetzt.

## Claims

1. A process of producing organically modified aerogels in which
a) from an aqueous water glass solution and with the aid with at least one organic and/or inorganic acid, a silicic acid sol is produced which has a pH value ≤ 4.0, whereby the at least one acid forms with the cations of the water glass in the silicic acid sol a salt which is difficult to dissolve;
b) the salts which are formed but which are difficult to dissolve are precipitated to the greatest possible degree and separated from the silicic acid sol at temperatures of 0 to 30°C;
c) the resulting silicic acid sol is polycondensed by the addition of a base to produce an SiO₂ gel;
d) the gel obtained in step c) is washed with an organic solvent until such time as the water content of the gel is ≤ 5% by weight;
e) the gel obtained in step d) is surface modified with at least one C₁-C₆ alcohol, and
f) the surface modified gel obtained in step e) is dried.

2. A process according to claim 1, characterised in that a 6 to 25% by weight sodium and/or potassium water glass solution is used as the water glass solution in step a).

3. A process according to claim 1 or 2, characterised in that the water glass solution, based on SiO₂, contains up to 90% by weight of zirconium, aluminium and/or titanium compounds which are capable of condensation.

4. A process according to at least one of claims 1 to 3, characterised in that 15 to 50% by weight sulphuric acid is used as the acid.

5. A process according to at least one of claims 1 to 4, characterised in that the silicic acid sol formed has a temperature in the range from 0 to 30°C.

6. A process according to at least one of claims 1 to 5, characterised in that NaOH, NH₄OH, KOH, Al(OH)_{3,} colloidal silicic acid and/or an alkaline water glass solution is used as the base in step b).

7. A process according to at least one of claims 1 to 6, characterised in that prior to step c), the gel is aged for between 1 second and 12 hours at 40 to 100°C and at a pH value of 4 to 11.

8. A process according to at least one of claims 1 to 7, characterised in that a C₁-C₅ alcohol, acetone, tetrahydrofurane, acetic acid ethyl ester, dioxane, n-hexane, n-heptane and/or toluene is used as the organic solvent in step c).

9. A process according to at least one of claims I to 8, characterised in that prior to surface modification, the gel obtained in step b) is reacted with a solution of an alkyl and/or aryl orthosilicate to formula R¹₄₋ₙSi(OR ²)ₙ, which is capable of condensation and in which n = 2 to 4 and R¹ and R², independently of each other, are linear or branched C₁-C₆ alkyl radicals, cyclohexyl radicals or phenyl radicals, or with an aqueous silicic acid solution.

10. A process according to at least one of claims 1 to 9, characterised in that at least one C₃-C₅ alcohol is used in step d).

11. A process according to at least one of claims 1 to 10, characterised in that isopropanol, isobutanol or tertiary butanol is used in step d).

12. A process according to at least one of claims 1 to 11, characterised in that the alcohol is used in an amount of 1 to 100% by weight in relation to the total solvent.

13. A process according to at least one of claims 1 to 12, characterised in that surface modification is carried out at a temperature in the range from 25°C to 220°C, a pressure of 1 to 50 bars and for between 30 minutes and 20 hours.

14. A process according to at least one of claims 1 to 13, characterised in that surface modification is carried out in the presence of small amounts of a silylating agent.

15. A process according to at least one of claims 1 to 14, characterised in that surface modification is carried out in the presence of a catalyst.

16. A process according to at least one of claims 1 to 15, characterised in that prior to step e) the surface modified gel is subjected to another solvent exchange.

17. A process according to at least one of claims 1 to 16, characterised in that the gel in step e) is sub-critically dried.

18. A process according to at least one of claims 1 to 17, characterised in that prior to gel production, infra-red opacifiers and/or fibres are added to the sol.

## Revendications

1. Procédé de préparation d'aérogels modifiés de manière organique, selon lequel
a) on prépare un sol d'acide silicique à partir d'une solution aqueuse de verre soluble au moyen d'au moins un acide organique et/ou inorganique, qui a une valeur de pH ≤ 4,0, dans lequel l'acide au moins présent forme avec les cations du verre soluble des sels peu solubles dans le sol d'acide silicique,
b) on fait précipiter le plus largement les sels peu solubles formés à des températures allant de 0 à 30°C et on les sépare du sol d'acide silicique,
c) on polycondense le sol d'acide silicique ainsi obtenu par addition d'une base pour obtenir un gel de SiO₂,
d) on lave le gel obtenu à l'étape c) avec un solvant organique jusqu'à ce que la teneur en eau du gel soit ≤ 5% en poids,
e) on modifie la surface du gel obtenu à l'étape d) avec au moins un alcool en C₁-C₆, et
e) on sèche le gel modifié en surface obtenu à l'étape e).

2. Procédé selon la revendication 1, caractérisé en ce que, l'on utilise comme solution de verre soluble à l'étape a) une solution d'orthosilicate de sodium et/ou de potassium allant de 6 à 25% en poids.

3. Procédé selon la revendication 1 ou 2, caractérisé en ce que, la solution de verre soluble, contient par rapport au SiO₂ jusqu'à 90% en poids de composés de zirconium, d'aluminium et/ou de titane aptes à la condensation.

4. Procédé selon au moins l'une des revendications 1 à 3, caractérisé en ce que, l'on utilise comme acide de l'acide sulfurique de 15 à 50% en poids.

5. Procédé selon au moins l'une des revendications 1 à 4, caractérisé en ce que le sol d'acide silicique formé présente une température dans la gamme allant de 0 à 30°C.

6. Procédé selon au moins l'une des revendications 1 à 5, caractérisé en ce qu'on utilise comme base à l'étape b) NaOH, NH₄OH, KOH, Al(OH)₃, de l'acide silicique colloïdal et/ou une solution alcaline de verre soluble.

7. Procédé selon au moins l'une des revendications 1 à 6, caractérisé en ce qu'on fait vieillir le gel avant l'étape c) de 40 à 100°C, à une valeur de pH de 4 à 11 entre 1 seconde et 12 heures.

8. Procédé selon au moins l'une des revendications 1 à 7, caractérisé en ce qu'on utilise comme solvant organique à l'étape c) un alcool en C₁-C₅, l'acétone, le tétrahydrofurane, l'acétate d'éthyle, le dioxanne, le n-hexane, le n-heptane et/ou le toluène.

9. Procédé selon au moins l'une des revendications 1 à 8, caractérisé en ce qu'on met à réagir le gel obtenu à l'étape b) avant la modification de surface avec une solution d'un orthosilicate d'alkyle et/ou d'aryle apte à la condensation de formule R¹₄₋ₙSi(OR²)ₙ, dans laquelle n = 2 à 4, et R¹ et R² représentent indépendamment l'un de l'autre des groupes alkyle en C₁ à C₆ linéaires ou ramifiés, des groupes cyclohexyle ou des groupes phényle, ou avec une solution aqueuse d'acide silicique.

10. Procédé selon au moins l'une des revendications 1 à 9, caractérisé en ce qu'on utilise à l'étape d) au moins un alcool en C₃-C₅.

11. Procédé selon au moins l'une des revendications 1 à 10, caractérisé en ce qu'on utilise à l'étape d) l'isopropanol, l'isobutanol ou le tert.-butanol.

12. Procédé selon au moins l'une des revendications 1 à 11, caractérisé en ce qu'on utilise l'alcool en une quantité de 1 à 100% en poids, par rapport à la totalité du solvant.

13. Procédé selon au moins l'une des revendications 1 à 12, caractérisé en ce qu'on réalise la modification de surface à une température dans la gamme de 25°C à 220°C, sous une pression de 1 à 50 bar entre 30 minutes et 20 heures.

14. Procédé selon au moins l'une des revendications 1 à 13, caractérisé en ce qu'on réalise la modification de surface en présence de petites quantités d'un agent de silylation.

15. Procédé selon au moins l'une des revendications 1 à 14, caractérisé en ce qu'on réalise la modification de surface en présence d'un catalyseur.

16. Procédé selon au moins l'une des revendications 1 à 15, caractérisé en ce qu'on réalise encore un échange de solvant du gel modifié en surface avant l'étape e).

17. Procédé selon au moins l'une des revendications 1 à 16, caractérisé en ce qu'on sèche le gel à l'étape e) dans des conditions sous-critiques.

18. Procédé selon au moins l'une des revendications 1 à 17, caractérisé en ce qu'on ajoute au sol avant la préparation du gel des agents opacifiants en IR et/ou des fibres.
